# EUROPÄISCHE PATENTANMELDUNG

(11) **EP 2 001 079 A1**
(43) Veröffentlichungstag der Anmeldung: **10.12.2008**
(21) Anmeldenummer: 08010108.2
(22) Anmeldetag: 03.06.2008
(51) Int. Cl.: H01Q 1/32, G01S 5/14, G01S 1/00

(54) **Antenne mit integriertem GPS-Empfänger und Schnittstelle zum Anschluss eines Endgerätes**

(30) Priorität: 08.06.2007 DE 102007026696
(71) Anmelder: Hirschmann Car Communication GmbH, 72654 Neckartenzlingen (DE)
(72) Erfinder: Langbein, Christian, 72663 Grossbettingen (DE); Funk, Bernhard, 73312 Geislingen (DE)
(74) Vertreter: Thul, Hermann

(57) **Zusammenfassung**

Die Erfindung betrifft eine Antenneneinrichtung (1) eines Fahrzeuges, die zumindest eine Empfangsantenne (2) aufweist, an der ein Übertragungsmittel, vorzugsweise ein Hochfrequenzkabel (6), angeschlossen ist, wobei an dem Übertragungsmittel ein Endgerät angeschlossen ist, das die mit der Empfangsantenne (2) empfangenen Signale verarbeitet, wobei erfindungsgemäß vorgesehen ist, dass die Antenneneinrichtung (1) zumindest einen Verstärker (3) sowie zumindest einen Empfänger (4) und zumindest eine daran angeschlossene Schnittstelleneinheit (5) aufweist wobei der Empfänger (4) zur Umwandlung der hochfrequenten Signale, die ihm von der Empfangsantenne (2) über den Verstärker (3) zugeführt werden, in digitale Daten ausgebildet ist, wobei die digitalen Daten über die Schnittstelleneinheit (5) einem mobilen, von dem Fahrzeug losgelösten Endgerät zugeführt werden.

## Beschreibung

Die Erfindung betrifft eine Antenneneinrichtung, die eine Empfangsantenne aufweist, an der ein Übertragungsmittel, vorzugsweise ein Hochfrequenzkabel, angeschlossen ist, wobei an dem Endübertragungsmittel ein Endgerät angeschlossen ist, dass die mit der Empfangsantenne empfangenen Signale verarbeitet, gemäß den Merkmalen des Oberbegriffes des Patentanspruches 1.

Mit anderen Worten betrifft die Erfindung eine Antenneneinrichtung, die eine Empfangsantenne und einen integrierten Empfänger aufweist, der an ein Übertragungsmittel, vorzugsweise ein Kabel oder eine drahtlose Übertragungsstrecke, angeschlossen ist, wobei an dem Endübertragungsmittel ein Endgerät angeschlossen ist, dass die mit der Empfangsantenne empfangenen Signale verarbeitet, gemäß den Merkmalen des Oberbegriffes des Patentanspruches 1.

Solche Antenneneinrichtungen sind beispielsweise in Form einer Dachantenne für ein Fahrzeug bekannt. Eine solche Antenneneinrichtung weist eine Empfangsantenne auf, mit der hochfrequente Signale empfangen werden. Diese Signale werden über ein Übertragungsmittel, vorzugsweise ein Hochfrequenzkabel, an ein Endgerät übertragen und dort weiterverarbeitet, beispielsweise in Form von Ton oder Bild dargestellt.

Neben diesen bekannten Antenneneinrichtungen gibt es auch Antenneneinrichtungen, die mehrere Antennenelemente für unterschiedliche Dienste aufweisen. So sind z. B. diese Antennenelemente zum Empfang von Rundfunk-, Fernseh-, Telefon- oder Navigationssignalen ausgebildet. Diese derart empfangenen Signale werden über getrennte Übertragungsmittel an die jeweiligen Endgeräte übertragen. Diese Endgeräte sind beispielsweise in Form von Navigationsgeräten, Fernsehgeräten, Freisprecheinrichtungen für Telefone und Rundfunkgeräte fest in einem Fahrzeug installiert. Das hat jedoch den Nachteil, dass der Benutzer eines solchen Fahrzeuges das jeweilige Endgerät fest im Fahrzeug installieren lassen muss, da er ansonsten diese Dienste nicht in Anspruch nehmen kann. Damit ist jedoch der Nachteil verbunden, dass eigenständige, d. h. vom Fahrzeug losgelöste Endgeräte nicht eingesetzt werden können, obwohl sie die gleichen Funktionen aufweisen, wie die im Fahrzeug fest eingebauten Endgeräte. Bei einem konkreten Fall ist es somit von Nachteil, dass in ein Fahrzeug ein kostenintensives Navigationsgerät eingebaut werden muss, obwohl der Fahrzeuganwender ein mobiles, d. h. eigenständig arbeitendes Navigationsgerät (wie z. B. ein Handheld mit einer darauf gespeicherten Navigations-Software) besitzt. In einem solchen Fall ist es entweder erforderlich, ein kostenintensives Navigationsgerät im Fahrzeug einbauen zu lassen oder aber auf eine Navigation im Fahrzeug zu verzichten, da es nicht möglich ist, das eigenständige mobile Gerät innerhalb des Fahrzeuges mit der dort vorhandenen Antenneneinrichtung zu nutzen. Gerade bei Navigationsgeräten ist es von Nachteil, dass die mobilen eigenständigen Geräte innerhalb des Fahrzeuges nicht oder nur sehr schlecht arbeiten, da deren Empfangsmodule insbesondere vom Fahrzeugdach bzw. metallisierten Scheiben abgeschirmt werden, d. h., dass von dem mobilen eigenständigen Endgerät die Navigationssignale des Satelliten nicht und oder nur unzureichend empfangen werden können.

Der Erfindung liegt daher die Aufgabe zugrunde, eine Antenneneinrichtung für ein Fahrzeug bereit zu stellen, die die eingangs geschilderten Nachteile vermeidet. Vor allen Dingen soll es ermöglicht werden, innerhalb eines Fahrzeuges eigenständige mobile Endgeräte an die Antenneneinrichtung des Fahrzeuges, die dort schon vorhanden ist, anzuschließen.

Diese Aufgabe ist durch die Merkmale des Patentanspruches 1 gelöst.

Erfindungsgemäß ist vorgesehen, dass die Antenneneinrichtung einen Verstärker sowie einen Empfänger und eine daran angeschlossene Schnittstelleneinheit aufweist, wobei der Empfänger zur Umwandlung der hochfrequenten Signale, die ihm von der Empfangsantenne über den Verstärker zugeführt werden, in digitale Daten ausgebildet ist, wobei die digitalen Daten über die Schnittstelleneinheit einem mobilen, von dem Fahrzeug losgelösten Endgerät zugeführt werden. Durch diese Lösung wird die Möglichkeit geschaffen, die Antenneneinrichtung des Fahrzeuges, die optimale Empfangseigenschaften bietet, für ein eigenständiges mobiles Endgerät innerhalb oder auch ausserhalb im Nahbereich des Fahrzeuges zu nutzen. Hierzu wird das Endgerät über die Schnittstelleneinheit mit der Antenneneinrichtung verbunden, wozu das Endgerät seinerseits ebenfalls eine entsprechende Schnittstelle aufweist. Bei der Schnittstelleneinheit handelt es sich nicht nur um eine einfache Steckverbindung, mit der das Endgerät und die Antenneneinrichtung über Kabel oder drahtlos miteinander verbunden werden. Denn die Antenneneinrichtung ist weiterhin dazu ausgebildet, mittels des beinhalteten Empfängers die empfangenen, hochfrequenten Signale, die zuvor mittels eines ebenfalls beinhalteten Verstärkers empfangen worden sind, in digitale Daten umzuwandeln. Diese Umwandlung in Datenformen, wie sie zum Beispiel auf Bussystemen zur Verfügung stehen, bewirken, dass dem mobilen eigenständigen Endgerät die Daten in einem fort zugeführt werden und es diese verarbeiten kann. Außerdem ist es von Vorteil, dass die empfangenen hochfrequenten Signale umgewandelt werden, da die digitalen Daten ohne große Probleme und Aufwand an das Endgerät übertragen werden können. Damit stellt die erfindungsgemäße Lösung die Möglichkeit bereit, die fahrzeugseitige Antenneneinrichtung, die optimale Empfangseigenschaften aufweist, dazu zu nutzen, innerhalb des Fahrzeuges (oder auch ggf. in einem Nahbereich außerhalb des Fahrzeuges) eigenständige mobile Endgeräte zu nutzen, ohne das auf fahrzeugseitig fest eingebaute Endgeräte zurückgegriffen werden muss. Diese können in besonders vorteilhafter Weise entfallen oder ggf. auch parallel zu dem eigenständigen mobilen Endgerät betrieben werden.

In besonders vorteilhafter Weise ist der in der Antenneneinrichtung integrierte Empfänger ein GPS-Empfänger und das mobile, von dem Fahrzeug losgelöste Endgerät zur Verarbeitung der digitalen Daten des GPS-Empfängers ausgebildet. Damit kann auf ein fest im Fahrzeug installiertes Navigationsgerät verzichtet werden und anstelle dessen ein mobiles, von dem Fahrzeug losgelöstes Endgerät für die Navigation genutzt werden. Heutzutage gibt es schon eine Vielzahl von Endgeräten, wie z. B. Laptops, PDA's, Handhelds oder dergleichen, auf denen eine spezielle Navigations-Software gespeichert ist oder die speziell hardwaremäßig zu diesem Zweck ausgebildet sind. Gemäß der vorliegenden Erfindung ist es jetzt möglich, solche Endgeräte an die Antenneneinrichtung des Fahrzeuges anzuschließen, um mittels der fahrzeugseitigen Antenneneinrichtung optimale Empfangseigenschaften zu haben und außerdem schon eine Vorverarbeitung (Umwandlung) der empfangenen hochfrequenten Signale von der Antenneneinrichtung durchführen zu lassen. Das bedeutet, dass das an der Schnittstelle der Antenneneinrichtung angeschlossene Endgerät schon aufbereitete Daten für die Navigation erhält, um aus diesen Daten die aktuelle Position und die gewünschte Route berechnen zu können.

In Weiterbildung der Erfindung ist vorgesehen, dass die Datenübertragung zwischen der Antenneneinrichtung und dem Endgerät drahtgebunden (z. B. über eine USB-Schnittstelle) oder drahtlos (z. B. durch Funk oder Infrarot, wie beispielsweise Bluetooth, W-LAN oder IrDA) erfolgt.

In einer weiteren Ausgestaltung der Erfindung ist vorgesehen, dass die Stromversorgung der Antenneneinrichtung und ihrer integrierten Elemente über die Schnittstelleneinheit erfolgt. Das bedeutet, dass die Antenneneinrichtung des Fahrzeuges selber keine Stromversorgung aufweisen muss, sondern die Stromversorgung ausgehend von dem angeschlossenen Endgerät erfolgt. Damit können zusätzliche Verkabelungen für die Stromversorgung für die aktiven Elemente der Antenneneinrichtung, insbesondere den dort integrierten Verstärker und Empfänger entfallen.

Ausführungsbeispiele für eine erfindungsgemäße Antenneneinrichtung, auf die diese jedoch nicht beschränkt ist, sind im folgenden erläutert und anhand der Figuren beschrieben.

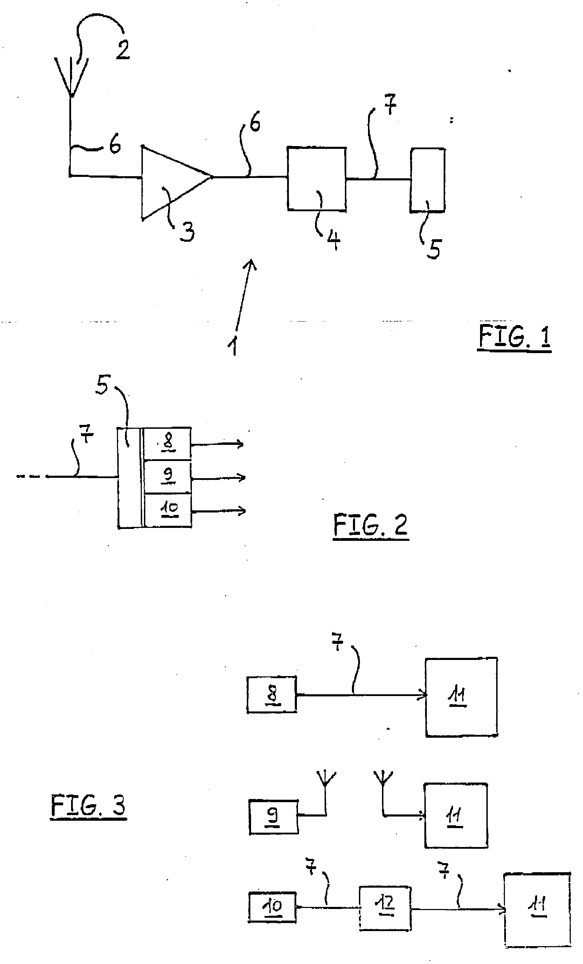

In den Figuren 1 bis 3, ist, soweit im Einzelnen dargestellt, mit 1 eine Antenneneinrichtung eines Fahrzeuges bezeichnet, die eine Empfangsantenne 2, einen Verstärker 3 sowie einen Empfänger 4 aufweist. Ausgangsseitig ist an dem Empfänger 4 eine Schnittstelleneinheit 5 für den Anschluss eines Endgerätes angeschlossen. Empfangsantenne 2, Verstärker 3 und Empfänger 4 sind untereinander über hochfrequente Übertragungsmittel, insbesondere Hochfrequenzkabel 6, miteinander verbunden. Dies kann auch anders in der folgenden Weise gestaltet sein: Antenne, Verstärker und Empfänger können auch auf ein und derselben Leiterplatte vorhanden sein, so dass zwischen den einzelnen Einheiten keine HF-Kabel erforderlich sind. Die Verbindung erfolgt dann direkt auf der Leiterplatte mittels gedruckter Leitungen.

Im Falle von Navigationssignalen, die von Satelliten mit der Empfangsantenne 2 empfangen werden, liegen die Frequenzen beispielsweise im Bereich von 1,5 Gigahertz. Der Empfänger 4 ist ausgangsseitig über eine Datenleitung 7 mit der Schnittstelleneinheit 5 verbunden. Das bedeutet, dass der Empfänger 4 derart zur Verarbeitung der ihm zugeführten hochfrequenten Signale ausgebildet ist, dass über die Datenleitung 7 digitale Daten, insbesondere serielle Daten, an die Schnittstelleneinheit 5 abgegeben werden. Diese unterscheiden sich sowohl hinsichtlich ihrer Frequenz als auch ihres Datenformates von den hochfrequenten Signalen, die am Eingang des Empfängers 4 anstehen. Die Empfangsantenne 2, der Verstärker 3 und der Empfänger 4 sitzen beispielsweise in einem gemeinsamen Gehäuse, wobei das Gehäuse auf einem Fahrzeugdach (oder an anderer Stelle des Fahrzeuges) angeordnet und befestigt ist. Ausgehend von dieser Einheit führt die Datenleitung 7 aus diesem Gehäuse heraus zu der Schnittstelleneinheit 5, die an beliebiger Stelle innerhalb des Fahrzeuges angeordnet ist. Handelt es sich bei dieser Schnittstelleneinheit 5 z. B. um eine USB-Schnittstelle 8, so kann ein entsprechender Steckplatz zum Anschluss des Endgerätes an geeigneter Stelle im Armaturenbrett oder im Fond des Fahrzeuges angeordnet sein. Handelt es sich um eine Funkschnittstelle 9, so ist an dieser wiederum eine Sendeantenne angeschlossen, mit der die Daten drahtlos an eine entsprechende Empfangsantenne des Endgerätes übertragen werden. Alternativ oder ergänzend dazu ist vorgesehen, dass die Schnittstelle der Antenneneinrichtung 1 als Bus-Schnittstelle 10 ausgestaltet ist, mit der die Daten der Antenneneinrichtung 1, die von dem Empfänger 4 abgegeben werden, in einen Bus des Fahrzeuges, z. B. ein CAN- oder LIN-Bus eingespeist werden. Dies hat den Vorteil, dass die optimal von der Anfangsantenne 2 der Antenneneinrichtung 1 empfangenen hochfrequenten Signale sowohl dem Endgerät als auch einem fest im Fahrzeug installierten Endgerät zugeführt werden können. Die Schnittstellen 8, 9 oder 10 können jeweils alleine, in Gruppen oder alle zusammen mit der Schnittstelleinheit 5 verbunden werden. Je nachdem, wieviele Endgeräte von der Antenneneinrichtung 1 mit Daten versorgt werden, können auch mehr als drei Endgeräte an die Schnittstelleneinheit 5 angeschlossen werden. Werden mehrere Endgeräte angeschlossen und sind diese zur Verarbeitung von Daten unterschiedlicher Dienste (z.B. Radio, TV, Telefon, GPS und dergleichen) ausgebildet, ist es denkbar, die hochfrequenten Signale mit mehr als einer Empfangsantenne zu empfangen (insbesondere eine Empfangsantenne je Dienst), einem gemeinsamen Empfänger oder getrennten Empfängern zuzuführen, die die Signale in Daten umwandeln, die dann wieder einer gemeinsamen Schnittstelleneinheit oder voneinander getrennte, den Diensten zugeordneten Schnittstelleneinheiten zugeführt und von dort an die angeschlossenen Endgeräte übertragen werden.

Es sei darauf hingewiesen, dass das Endgerät, dass die Bezugsziffer 11 trägt, ein vom Fahrzeug losgelöstes, mobiles und eigenständig arbeitendes Endgerät ist, welches die von der Antenneneinrichtung 1 nicht nur empfangenen, sondern auch aufbereitete Daten erhält.

Ein besonders wichtiger und vorteilhafter Anwendungsfall ist darin zu sehen, dass der Empfänger 4 ein GPS-Empfänger ist, dem die hochfrequenten Signale, die von einem oder mehreren Satelliten abgestrahlt werden und von der Empfangsantenne 2 empfangen werden, zugeführt werden, die anschließend von dem GPS-Empfänger aufbereitet werden. Diese aufbereiteten Daten werden über die Schnittstelleneinheit 5 der Antenneneinrichtung 1 dem vom Fahrzeug losgelösten, mobilen und eigenständigen Endgerät 11 zur weiteren Verarbeitung zur Verfügung gestellt. Dies kann drahtgebunden, beispielsweise über die USB-Schnittstelle 8, oder drahtlos (z. B. über die Funkschnittstelle 9) erfolgen. Die drahtlose Anbindung des Endgerätes 11 an die Antenneneinrichtung 1 erfolgt beispielsweise dann sehr schnell und unkompliziert, wenn die Schnittstelleneinheit 5 der Antenneneinrichtung 1 sowie die korrespondierende Schnittstelleneinheit des Endgerätes 11 zur Kommunikation und Datenübertragung in den Datenformaten Bluetooth, W-LAN oder dergleichen ausgebildet sind. Dies hat auch dann einen besonderen Vorteil, dass das Endgerät 11, sofern es sich im Nahbereich oder im Innenbereich des Fahrzeuges befindet, die Antenneneinrichtung 1 selbständig erkennen und mit ihr Kontakt aufnehmen kann.

Gemäß der vorliegenden Erfindung handelt es sich also um einen in einem Fahrzeug integrierten GPS-Empfänger, der im Innenbereich des Fahrzeuges und in Verbindung stehend mit der außerhalb des Fahrzeuges angeordneten Empfangsantenne montiert ist. Dieser GPS-Empfänger gibt die Positionsdaten, die er über die Signale, die von einem oder mehreren Satelliten abgestrahlt werden, beispielsweise über Bluetooth und über die USB-Schnittstelle an das Endgerät aus und erlaubt somit mobilen, eigenständigen und vom Fahrzeug losgelösten Endgeräten innerhalb des Fahrzeuges auf diese Daten zuzugreifen. Die Spannungsversorgung der aktiven Elemente der Antenneneinrichtung 1 erfolgt über die Spannungsversorgung des Endgerätes und/oder über das Bordnetz des Fahrzeuges. Wenn das Endgerät sich im Nahbereich oder Innenbereich des Fahrzeuges befindet und mit der erfindungsgemäßen Antenneneinrichtung 1 selbständig Kontakt aufnimmt, kann weiterhin vorgesehen werden, dass diese drahtgebundene oder drahtlose Verbindung zwischen Antenneneinrichtung und Endgerät verschlüsselt wird und der Zugang des Endgerätes zu der Antenneneinrichtung 1 ggf. mittels einer Zugangssicherung (z. B. durch Eingabe einer PIN) gesichert wird.

Wenn man von einem allgemeinen Endgerät (z.B. Telefon) ausgeht, dann ist es sinnvoll, sich nicht nur auf den Empfangsfall (Empfänger, Empfangsantenne und die dafür erforderlichen Elemente) zu beziehen, sondern auch auf den Sendefall für den entsprechenden Rückkanal (z.B. Sende-/Empfangsantenne). Für GPS ist der Sendefall allerdings nicht möglich, denn hier werden nur die Daten empfangen. Aber z.B. für die Nutzung der im Fahrzeug integrierten Telefonantenne oder auch für zukünftige Dienste wie z.B. Car-to-Car-Communication, Car-to-Environment etc. muss auch der Sendefall gewährleistet und die dafür erforderliche Hardware vorgesehen werden.

### Bezugszeichenliste

- 1.: Antenneneinrichtung
- 2.: Empfangsantenne
- 3.: Verstärker
- 4.: Empfänger
- 5.: Schnittstelleneinheit
- 6.: Hochfrequenzkabel
- 7.: Datenleitung
- 8.: USB-Schnittstelle
- 9.: Funkschnittstelle
- 10.: Bus-Schnittstelle
- 11.: Endgerät
- 12.: Fahrzeugbus

## Patentansprüche

1. Antenneneinrichtung (1) eines Fahrzeuges, die zumindest eine Empfangsantenne (2) aufweist, an der ein Übertragungsmittel, vorzugsweise ein Hochfrequenzkabel (6), angeschlossen ist, wobei an dem Übertragungsmittel ein Endgerät (11) angeschlossen ist, das die mit der Empfangsantenne (2) empfangenen Signale verarbeitet, **dadurch gekennzeichnet, dass** die Antenneneinrichtung (1) zumindest einen Verstärker (3) sowie zumindest einen Empfänger (4) und zumindest eine daran angeschlossene Schnittstelleneinheit (5) aufweist, wobei der Empfänger (4) zur Umwandlung der hochfrequenten Signale, die ihm von der Empfangsantenne (2) über den Verstärker (3) zugeführt werden, in digitale Daten ausgebildet ist, wobei die digitalen Daten über die Schnittstelleneinheit (5) einem mobilen, von dem Fahrzeug losgelösten Endgerät (11) zugeführt werden.

2. Antenneneinrichtung (1) nach Anspruch 1, **dadurch gekennzeichnet, dass** der Empfänger (4) ein GPS-Empfänger ist und das Endgerät (11) zur Verarbeitung der digitalen Daten des GPS-Empfängers ausgebildet ist.

3. Antenneneinrichtung (1) nach Anspruch 1 oder 2, **dadurch gekennzeichnet, dass** die Schnittstelleneinheit (5) eine USB-Schnittstelle (8) umfasst.

4. Antenneneinrichtung (1) nach Anspruch 1 oder 2, **dadurch gekennzeichnet, dass** die Schnittstelleneinheit (5) eine Funkschnittstelle (9) umfasst.

5. Antenneneinrichtung (1) nach Anspruch 1 oder 2, **dadurch gekennzeichnet, dass** die Schnittstelleneinheit (5) eine Bus-Schnittstelle (10) umfasst.

6. Antenneneinrichtung (1) nach einem der vorhergehenden Ansprüche, **dadurch gekennzeichnet, dass** die Stromversorgung der Antenneneinrichtung (1) über die Schnittstelleneinheit (5) erfolgt.
